# EUROPEAN PATENT SPECIFICATION

(11) **EP 2 647 296 B1**
(45) Date of publication and mention of the grant of the patent: **17.10.2018**
(21) Application number: 12162807.7
(22) Date of filing: 02.04.2012
(51) Int. Cl.: A23D 7/00, A23D 9/04, A23D 7/05

(54) **Triglyceride fat comprising product and method for preparing such products**
Triglyceridfett-haltiges Produkt und Herstellungsverfahren für die Produkte
Produit comprenant une graisse de triglycérides et procédé de préparation de tels produits

(43) Date of publication of application: 09.10.2013
(73) Proprietor: Centravo Holding AG, 8048 Zürich (CH)
(72) Inventor: Grote, Martin R., 4532 Feldbrunnen (CH); Asbeck, Lutz S., 4532 Feldbrunnen (CH)
(74) Representative: BOVARD AG

(56) References cited:
- EP-A2- 0 294 974
- WO-A1-2006/002739
- GB-A- 827 172

## Description

The present invention relates to a triglyceride fat comprising product and a method for preparing such product. The invention is defined by the claims. Triglycerides are esters formally derived from a glycerol molecule and three fatty acid molecules. They are constituents of vegetable oils or animal fats and have been used for centuries as components in a wide variety of products such as food products, cosmetic products, technical products and medical products. Their melting points are close to ambient or human body temperatures, i.e. typically between around 10°C and 40°C. Triglycerides having one or more unsaturated fatty acid chains have lower melting points and tend to be liquid at ambient temperature. Triglycerides having only saturated fatty acid chains have higher melting points and tend to be solid at ambient temperature. Typical examples of well-known triglycerides are cacao butter, coconut oil, soybean oil, palm oil and palm kernel oil. They are extracted from the pulp or seeds of fruits that grow on some species of tropical trees. The triglyceride fat obtained form a specific species of trees is a species-characteristic mixture of different types of triglycerides with a characteristic fatty acid spectrum.

Some of the above triglycerides are highly appreciated by the food, cosmetics, pharmaceutical, technical and biofuel industries as components or starting materials for their products. However, the cultivation of trees growing triglyceride containing fruits and the consumption or processing into biofuels of triclycerides obtained from the pulp and/or seeds of these fruits have raised environmental, health and economic issues. For instance, palm oil has been blamed for deforestation in tropical regions causing substantial and often irreversible damage to the natural environment, habitat loss and contribution to greenhouse gas emissions. Although the cultivation of and harvesting from cacao trees is deemed to be more sustainable environmentally and socially than the cultivation of and harvesting from oil palm trees, it is questionable whether any future increases in demand for cacao butter could and should be met by increasing the cultivated area of cacao trees.

In order to meet the demand for specific rare and more expensive triglyceride fats, it has been common practice for decades to use some abundantly available cheaper triglyceride fats and modify them physically and/or chemically. For instance, a given triglyceride fat of one plant origin or a mixture of triglyceride fats from different plant origins and each with a given fatty acid spectrum can be fractionated to obtain different fractions of triglycerides with specific physical and chemical properties. Alternatively or in addition, such given triglyceride fat can be hydrogenated in order to partially or completely saturate some fatty acid chains in each of the triglyceride molecules, or the given triglyceride fat can be interesterified in order to redistribute the fatty acid chains within the mixture of triglyceride molecules. Also, these fractionation, hydrogenation and interesterification steps can be combined and the resulting triglyceride fractions can then be mixed/recombined again to obtain a customized triglyceride fat. However, these or similar modifications of "natural" triglyceride fats into "unnatural" triglyceride fats give rise to concern. For instance, hydrogenation may produce triglycerides with unhealthy trans fatty acids, and the effects of interesterified triglycerides have been hotly debated among food scientists. Thus, most of these modified triglyceride fats lack acceptance by at least the informed consumer.

There have been attempts to replace cacao butter by shea butter. However, due to the slow growth and relatively late maturity of shea trees, it will/would take at least one or two decades for any significant number of presently planted shee trees to reach maturity and constitute a source for a substitute triglyceride fat.

In EP 0294974 A2 a method for producing oily compositions like chocolate, nut paste, margarine and the like is disclosed, which uses an Allanblackia extracted oil. The method tries to omit adjusting a temperature during the production of the oily composition and therefore uses a powder of stable crystals of a fat or oil, which comprises a triglyceride with a specific number of carbon atoms. Thus the composition can be cooled while preventing melding of the powder particles. WO 2006/002739 A1 proposes an edible oil in water emulsion comprising a natural structuring hardstock fat, which is preferably isolated from plants belonging to the genus Allanblackia or the genus Pentadesma, which do not need modification after refining.

Considering all the above, there is a demand for a product comprising an alternative or substitute or even improved triglyceride fat replacing any one of the above mentioned triglyceride fats without any of the above mentioned disadvantages.
The present invention meets this demand by providing a product comprising a triglyceride fat component, wherein the triglyceride fat component comprises at least one of Allanblackia fat, for instance from the tree species Allanblackia floribunda, Allanblackia stuhlmannii, etc., and Pentadesma fat, for instance from the tree species Pentadesma butyraceum, and is present as a suspension of defined fat crystals of at least one of Allanblackia fat and Pentadesma fat, wherein the fat crystals have a particle diameter spectrum where more than 90%, preferably more than 98% of all suspended fat crystals have particle diameters of less than 50 µm, preferably less than 20µm in a liquid matrix of at least one of Allanblackia fat, Pentadesma fat and/or a further edible triglyceride component, of at least one of Allanblackia fat (AB), Pentadesma fat (PD) and a further edible triglyceride component, wherein the matrix is a composition with fat constituent(s) in solid form and oil constituent(s) in liquid form. In the following text, this matrix is referred to as the oil/fat composition with some constituent(s) substantially in solid form (fat) and some constituent(s) substantially in liquid form (oil). Allanblackia has a high percentage of stearic acid (S) with 18 carbon atoms and no double bonds (C18:0) and of oleic acid (O) with 18 carbon atoms and one double bond (C18:1). Depending on the Allanblackia tree subspecies, soil and climate conditions, the Allanblackia seed fat comprises 45-58% by weight stearic acid and 40-51% by weight oleic acid. In particular and more importantly, Allanblackia fat comprises around 68-77% by weight SOS triglyceride molecules, around 15-24% by weight SOO triglycerides and a very low percentage of SSS triglyceride molecules. As a result, when crystallizing SOS triglyceride crystals from the melted fat phase, the "SOS crystals" obtained are of high purity with very little impurities by SSS or SOO triglyceride molecules. Thus, these high purity SOS crystals provided by the AB and/or PD fat are characterized by a high melting point, a high steepness in the melting
curve, and they are extremely stable and provide the basis for establishing crystals of defined nature in the AB and/or PD fat.

It is disclosed herein that the AB and/or PB fat crystals have a particle diameter spectrum where more than 90%, preferably more than 98% of all suspended fat crystals have particle diameters of less than 50µm, preferably less than 20µm. This guarantees a pleasant smooth mouthfeel, i.e. no sandy mouthfeel.

In a further preferred embodiment of the invention, depending on the application, the AB and/or PD fat crystal share, at 20°C, within the fat component is 10 to 80% by volume, preferably 30 to 60% by volume with respect to the entire fat component volume. The fat component may be at least one of AB fat, PD fat and a further edible fat/oil, i.e. AB fat and/or PD fat and/or a further edible fat/oil. This guarantees product stability at ambient temperatures and pleasant organoleptic properties (bite not too hard, significant melting in the mouth). The triglyceride fat component may include AB and/or PD fat and, in addition, a liquid oil such as seed oil or fractionated olein or other oils.

In another preferred embodiment of the invention, a crystal configuration share of more than 50%, preferably more than 80% of all suspended fat crystals belong to the thermodynamically most stable crystal configuration (of a polymorphic system) of at least one of the Allanblackia fat and Pentadesma fat. Most preferably, only the most stable and highest melting crystals of the AB and/or PD fat are present in the AB and/or PD fat. When stored under conditions preventing the melting of these stable crystals, the product can be stored over extended periods of time without suffering any changes due to conversion of less stable crystal configurations into more stable crystal configurations (no re-crystallisation of fat crystals). Thus, a product having a long shelf-life and a stable crystal configuration is obtained.

In a particularly healthy embodiment of the invention, more than 94%, preferably more than 98% of the triglyceride molecules of the entire fat component have an unsaturated fatty acid chain in the sn-2 position of the glycerol backbone. The presence of the unsaturated fatty acid chain in the sn-2 position is regarded as being significantly healthier than a saturated fatty acid in the sn-2 position as in interesterified and/or hydrogenated fats or animal fats.

Preferably, the fat component of the product accounts for 20 to 80% by weight of the product weight or of the oil/fat composition. This enables the AB and/or PD fat component to act as a structure forming component, i.e. the AB and/or PD fat component is primarly responsible for the structure of the oil/fat composition used in different products and/or applications.

In a special embodiment of the invention, the product is more than 99%, i.e practically 100% AB fat or more than 99%, i.e. practically 100% PD fat or a combination of AB and PD fat with more than 99%, i.e. practically 100% AB and PD fat. This type of product can be used as a crystallization starter or habit modifier. Again, most preferably, only the the most stable and highest melting crystals of the AB and/or PD fat are present in the AB and/or PD fat as a crystallization starter.

In a special embodiment of the invention, the product comprises a first region/portion comprising at least one of Allanblackia fat and Pentadesma fat and a second region/portion comprising at least one of cacao butter, chocolate, water and air, wherein the first and second regions/portions contact each other at an interface extending therebetween. In particular, the AB and/or PD fat components may be used as an anti-blooming fat ingredient for chocolate coated products such as pralines. The AB and/or PD fat components are fully compatible with cacao fat crystals and do not develop any tendency to fat blooming as do some other triglyceride fat crystals such as lauric fat crystals. If used in combination with cacao butter, the AB and/or PD fat will not soften the cacao butter crystals during storage as seed oils can do, thus preventing any migration of the oil phase in the cacao butter crystal structure. If used in combination with water, the AB and/or PD fatty acids will not generate a soapy/metallic off-taste as do lauric fatty acids in a wet environment, thus giving water-containing ("wet") products a better taste and longer taste shelf-life. If used in combination with air, i.e. in an aerated creamy product such as chocolate foam, the AB and/or PD fat crystals provide good mechanical foam stability and high volume extension for aerated products.

The present invention also provides a method for processing an initial triglyceride fat component comprising at least one of Allanblackia fat and Pentadesma fat, preferably in a product as defined above, or for combining with at least one additional component to obtain a product as defined above, the method comprising the following steps:
a) melting the fat to generate a first phase consisting of melted fat; and
b) contacting the melted fat first phase in an exposure region with a cooling material having a temperature lower than the crystallization temperature of at least one crystal modification of the melted fat first phase, in order to induce crystallization of at least one crystal modification and form a second phase consisting of solid fat comprising at least one of Allanblackia fat crystals and Pentadesma fat crystals.

The cooling process can be achieved by at least one of a heat exchanger surface provided by or with at scraper tool, a drum crystallizer or any other cooled surface, or it can be achieved by direct cooling using a liquid or a gas, in particular a liquefied gas, such as liquid carbon dioxide, air, water, ammonia or frigene, or cooled particles of a solid material such as carbon dioxide or water ice. As an alternative, any component/ingredient used in the processing can be used as a cooling means. This causes rapid cooling of the fat in the exposure region close to the cooling material / melted fat interface. As a result, many crystals start to grow, but they do not have enough time to grow into large crystals. Thus, many small crystals are produced in the melted fat phase.

It is disclosed herein that the temperature difference between the crystallization temperature of the at least one crystal modification and the cooling material is between 1K and 10K, preferably between 1K and 3K. Typically, the at least one crystal modification is the highest melting and one of the most stable crystal modifications. As a result, crystallization of primarily this crystal modification or only this crystal modification is achieved.

Preferably, the residence time of the melted fat in the exposure region where it is in thermal contact with the cooling material is 5s to 60min, preferably 1min to 10min. This condition can be achieved in a scraper drum, tank or tube crystallizer. If these conditions are used, a larger temperature difference of 5K to 40K between the crystallization temperature of the at least one crystal modification and the cooling material may be used.

Preferably, in addition to the above mentioned cooling conditions, a mechanical shear field and/or an extensional flow pattern is established in the exposure region during at least a fraction of the residence time. This causes the crystals to be torn into pieces just after their growth was started, thus increasing the number of crystals and reducing the average size of each crystal, i.e. increasing the nucleation rate.

Preferably, seed crystals of at least one of an Allanblackia fat crystal modification or a Pentadesma fat crystal modification are added to the melted fat phase prior to or during contacting the melted fat phase with the cooling material. In particular, a small amount, preferably 1-4%, of SSS and/or SOS triglyceride crystals of AB and/or PD fat and/or monoglycerides and diglycerides may be added to the AB and/or PD fat. Again, this contributes to increasing the nucleation rate.

In a preferred embodiment of the invention, the initial Allanblackia (AB) fat or Pentadesma (PD) fat is obtained by refining/purifying natural AB fat or PD fat without altering relative triglyceride concentrations and without exposing the natural AB fat or PD fat to any fractionation, hydrogenation or interesterification steps. This guarantees that the natural triglyceride spectrum and and the vitamins/antioxidants content remain largely unaffected, thus providing a "natural" product.

Preferably, the above described process is applied to at least one of an AB fat component and a PD fat component within a precursor product, i.e. a product that includes the AB and/or PD fat component, and which precursor product is then processed as decribed above to obtain a final product according to the invention. In an alternative, the above described process is applied to at least one of an AB fat component and a PD fat component which processed fat component is then combined with at least one additional component to again obtain a final product according to the invention.

Additional advantages, features and applications of the invention follow from the description below of examples given for illustrative purposes only and not to be construed as limiting the scope of the invention as defined in the enclosed claims.

Main application areas of Allanblackia and/or Pentadesma fat are: bakery margarine, industrial margarine, general industry fats and shortenings, frying fats, choco spreads, filling fats, marinade fats, crystallization starter / habit modifier, cosmetic products and cremes, pharmaceutical products and technical products. But the application opportunities are not limited to these.

### Example 1: Filling fat application

### Composition: 50% AB / 50% seed oil.

This fat blend gives a good stability at ambient temperature and has solid fat content at 20°C of about 31%. This product provides a good mouthfeel with a good creaminess/stability at 30°C of about 17% and a very low solid fat content at 35°C of about 1% (indicating a fully melted product at 35°C; melting point is at about 3% solid fat content).

Cooling of this fat blend can be done by air or some other suitable gas or with a drum.

### Example 2: Choco/hazelnut spread

### Composition: 24% AB / 76% seed oil.

This fat blend provides good spreadibility with a low solid fat content at 10°C of about 17%, enough solid fat at 20°C and 30°C with solid fat contents of about 13% and 4% to prevent oil leakage at elevated temperatures. Both mouthfeel and the final product characteristics are almost identical to the performance of choco spreads where cacao butter is applied. This product provides a good alternative with an even better functionality as a palm based product.

Cooling of this fat blend can be done with a scraped surface heat exchanger or by tempering using industry equipment.

## Claims

1. A product comprising a triglyceride fat component, which comprises at least one of Allanblackia fat and Pentadesma fat, **characterized in that** the triglyceride fat component is present as a suspension of defined fat crystals of at least one of Allanblackia fat and Pentadesma fat, wherein the fat crystals have a particle diameter spectrum where more than 90%, preferably more than 98% of all suspended fat crystals have particle diameters of less than 50 µm, preferably less than 20µm in a liquid matrix of at least one of Allanblackia fat, Pentadesma fat and/or a further edible triglyceride component, wherein the matrix is a composition with fat constituent(s) in solid form and oil constituent(s) in liquid form.

2. The product according to claim 1, **characterized in that** the fat crystal share, at 20°C, within the fat component is 10 to 80% by volume, preferably 30 to 60% by volume with respect to the fat component volume.

3. The product according to any one of claims 1 to 2, **characterized in that** a crystal configuration share of more than 50%, preferably more than 80% of all suspended fat crystals belong to the thermodynamically most stable crystal configuration of at least one of the Allanblackia fat and Pentadesma fat.

4. The product according to any one of claims 1 to 3, **characterized in that** more than 94%, preferably more than 98% of the triglyceride molecules of the entire fat component have an unsaturated fatty acid chain in the sn-2 position of the glycerol backbone.

5. The product according to any one of claims 1 to 4, **characterized in that** the fat component of the product accounts for 5 to 80% by weight of the product weight.

6. The product according to any one of claims 1 to 5, **characterized in that** the product is 100% Allanblackia fat or 100% Pentadesma fat.

7. The product according to any one of claims 1 to 5, **characterized in that** it comprises a first region/portion comprising at least one of Allanblackia fat and Pentadesma fat and a second region/portion comprising cacao butter or chocolate or water, said first and second regions/portions contacting each other at an interface extending therebetween.

8. A method for processing an initial triglyceride fat component comprising at least one of Allanblackia fat and Pentadesma fat, preferably in a product as defined in any one of claims 1 to 7 or for combining with at least one additional component to obtain a product as defined in any one of claims 1 to 5 and 7 said method comprising the steps of
a) melting the fat to generate a first phase consisting of melted fat; and
b) contacting the melted fat first phase in an exposure region with a cooling material having a temperature which is between 1K and 10K lower than the crystallization temperature of at least one crystal modification of the melted fat first phase, in order to induce crystallization of at least one crystal modification and form a second phase consisting of solid fat comprising at least one of Allanblackia fat crystals and Pentadesma fat crystals.

9. The method according to claim 8, **characterized in that** the temperature difference between the crystallization temperature of the at least one crystal modification and the cooling material is between 1K and 3K.

10. The method according to claim 8 or 9, **characterized in that** the residence time of the melted fat in the exposure region where it is in thermal contact with the cooling material is 5s to 60min, preferably 1min to 10min.

11. The method according to any one of claims 8 to 10, **characterized by** establishing a mechanical shear field and/or an extensional flow pattern in the exposure region during at least a fraction of the residence time.

12. The method according to any one of claims 8 to 11, **characterized by** adding seed crystals of at least one of an Allanblackia fat crystal modification or a Pentadesma fat crystal modification to the melted fat phase prior to or during contacting the melted fat phase with the cooling material.

13. The method according to any one of claims 8 to 12, **characterized in that** the initial Allanblackia fat or Pentadesma fat is obtained by refining/purifying natural Allanblackia fat or Pentadesma fat without altering relative triglyceride concentrations and without exposing the natural Allanblackia fat or Pentadesma fat to any fractionation, hydrogenation or interesterification steps.

14. A method for preparing a product as defined in any one of claims 1 to 7, **characterized in that** a process according to any one of claims 8 to 13 is applied to at least one of an Allanblackia fat component and a Pentadesma fat component in a precursor product, or **in that** a process according to any one of claims 8 to 13 is applied to at least one of an Allanblackia fat component and a Pentadesma fat component which processed fat component is then combined with at least one additional component.

## Patentansprüche

1. Produkt, umfassend eine Triglyceridfett-Komponente, enthaltend mindestens eines aus Allanblackia-Fett und Pentadesma-Fett, **dadurch gekennzeichnet, dass** die Triglyceridfett-Komponente als eine Suspension von definierten Fettkristallen von mindestens einem aus Allanblackia-Fett und Pentadesma-Fett vorliegt, wobei die Fettkristalle ein Partikeldurchmesserspektrum aufweisen, wobei mehr als 90%, vorzugsweise mehr als 98%, aller suspendierten Fettkristalle Partikeldurchmesser von weniger als 50µm aufweisen, vorzugsweise weniger als 20µm, in einer flüssigen Matrix aus mindestens einem aus Allanblackia-Fett, Pentadesma-Fett und/oder einer weiteren essbaren Triglycerid-Komponente, wobei die Matrix eine Zusammensetzung mit Fettbestandteil(en) in fester Form und Ölbestandteil(en) in flüssigen Form ist.

2. Produkt nach Anspruch 1, **dadurch gekennzeichnet, dass** der Fettkristallanteil, bei 20°C, in der Fettkomponente 10 bis 80 Vol.-% beträgt, vorzugsweise 30 bis 60 Vol.-%, bezogen auf das Fettkomponentenvolumen.

3. Produkt nach einem der Ansprüche 1 bis 2, **dadurch gekennzeichnet, dass** ein Anteil einer Kristallkonfiguration von mehr als 50%, vorzugsweise von mehr als 80%, aller suspendierten Fettkristalle zu der thermodynamisch stabilsten Kristallkonfiguration von mindestens einem aus Allanblackia-Fett und Pentadesma-Fett gehört.

4. Produkt nach einem der Ansprüche 1 bis 3, **dadurch gekennzeichnet, dass** mehr als 94%, vorzugsweise mehr als 98%, der Triglycerid-Moleküle der gesamten Fettkomponente eine ungesättigte Fettsäurekette in der sn-2-Position des Glyzerin-Gerüsts haben.

5. Produkt nach einem der Ansprüche 1 bis 4, **dadurch gekennzeichnet, dass** die Fettkomponente des Produkts 5 bis 80 Gew.-% des Produktgewichts beträgt.

6. Produkt nach einem der Ansprüche 1 bis 5, **dadurch gekennzeichnet, dass** das Produkt 100% Allanblackia-Fett oder 100% Pentadesma-Fett ist.

7. Produkt nach einem der Ansprüche 1 bis 5, **dadurch gekennzeichnet, dass** es einen ersten Bereich/Anteil, umfassend mindestens eines aus Allanblackia-Fett und Pentadesma-Fett und einen zweiten Bereich/Anteil aufweist, umfassend Kakaobutter oder Schokolade oder Wasser, wobei die ersten und zweiten Bereiche/Anteile miteinander an einer zwischen ihnen sich erstreckenden Grenzfläche in Kontakt stehen.

8. Verfahren zur Herstellung einer initialen Trigylceridfett-Komponente, umfassend mindestens eines aus Allanblackia-Fett und Pentadesma-Fett, vorzugsweise in einem Produkt wie in einem der Ansprüche 1 bis 7 definiert oder zur Kombination mit mindestens einer zusätzlichen Komponente, um das Produkt, definiert gemäss einem der Ansprüche 1 bis 5 und 7, zu erhalten, wobei das Verfahren die Schritte umfasst:
a) Schmelzen des Fetts, um eine erste Phase zu erzeugen, bestehend aus geschmolzenem Fett; und
b) Kontaktieren der ersten Phase geschmolzenen Fetts in einem Einwirkbereich mit einem Kühlmedium, welches eine Temperatur hat, die zwischen 1K und 10K niedriger ist als die Kristallisationstemperatur von mindestens einer Kristallmodifikation der ersten Phase geschmolzenen Fetts, um eine Kristallisation von mindestens einer Kristallmodifikation zu erzeugen und Bilden einer zweiten Phase, bestehend aus festem Fett, umfassend mindestens eines aus Allanblackia-Fettkristallen und Pentadesma-Fettkristallen.

9. Verfahren nach Anspruch 8, **dadurch gekennzeichnet, dass** die Temperaturdifferenz zwischen der Kristallisationstemperatur der mindestens einen Kristallmodifikation und dem Kühlmedium zwischen 1K und 3K ist.

10. Verfahren nach Anspruch 8 oder 9, **dadurch gekennzeichnet, dass** die Verweilzeit des geschmolzenen Fetts in dem Einwirkbereich, in dem es im thermischen Kontakt mit dem Kühlmedium ist, 5s bis 60min beträgt, vorzugsweise 1min bis 10min.

11. Verfahren nach einem der Ansprüche 8 bis 10, **dadurch gekennzeichnet, dass** ein mechanisches Scherfeld und/oder ein Dehnströmungsmuster in dem Einwirkbereich während mindestens einem Teil der Verweilzeit aufgebaut sind/ist.

12. Verfahren nach einem der Ansprüche 8 bis 11, **dadurch gekennzeichnet, dass** Kristallkeime mindestens eines aus einer Allanblackia-Fett Kristallmodifikation oder einer Pentadesma-Fett Kristallmodifikation der geschmolzenen Fettphase vor oder während der Kontaktierung der geschmolzenen Fettphase mit dem Kühlmedium zugefügt werden.

13. Verfahren nach einem der Ansprüche 8 bis 12, **dadurch gekennzeichnet, dass** das initiale Allanblackia-Fett oder Pentadesma-Fett erhalten wird durch Raffinieren/Aufreinigen natürlichen Allanblackia-Fetts oder Pentadesma-Fetts ohne Veränderung relativer Triglycerid-Konzentrationen und ohne Aussetzen des natürlichen Allanblackia-Fetts oder Pentadesma-Fetts jeglicher Fraktionierungs-, Hydrierungs- oder Umesterungsschritte.

14. Verfahren zur Herstellung eines Produkts, definiert nach einem der Ansprüche 1 bis 7, **dadurch gekennzeichnet, dass** ein Verfahren gemäss einem der Ansprüche 8 bis 13 angewandt ist auf mindestens eines aus einer Allanblackia-Fettkomponente und einer Pentadesma-Fettkomponente in einem Vorstufenprodukt, oder dadurch, dass ein Verfahren gemäss einem der Ansprüche 8 bis 13 angewandt ist auf mindestens eines aus einer Allanblackia-Fettkomponente und einer Pentadesma-Fettkomponente, wobei die verarbeitete Fettkomponente dann mit mindestens einer zusätzlichen Komponente kombiniert wird.

## Revendications

1. Produit comprenant un composant gras à base de triglycérides, comprenant au moins un composant tel que la graisse d'Allanblackia et/ou la graisse de Pentadesma, **caractérisé en ce que** le composant gras à base de triglycérides est présent sous forme de suspension de cristaux de graisse définis de graisse d'Allanblackia et/ou de graisse de Pentadesma, les cristaux de graisse ayant un spectre de diamètre de particules où plus de 90%, et de manière préférée plus de 98% de tous les cristaux de graisses suspendus ont des diamètres de particule de moins de 50 µm, et de préférence moins de 20 µm dans une matrice liquide d'au moins un composant de graisse d'Allanblackia, de graisse de Pentadesma et/ou d'un autre composant comestible à base de triglycérides, la matrice étant une composition comportant des composants gras sous forme solide et des composants huileux sous forme liquide.

2. Produit selon la revendication 1, **caractérisé en ce que** la proportion de cristaux de graisse représente, à 20°C, de 10 à 80% du volume du composant gras, et de préférence de 30 à 60% du volume par rapport au volume du composant gras.

3. Produit selon l'une des revendications 1 à 2, **caractérisé en ce qu'**une proportion de configuration de cristaux de plus de 50%, et de préférence de plus de 80% de tous les cristaux de graisse suspendus, appartiennent à la configuration de cristaux la plus stable thermodynamiquement de graisse d'Allanblackia et/ou de graisse de Pentadesma.

4. Produit selon l'une des revendications 1 à 3, **caractérisé en ce que** plus de 94%, de manière préférée plus de 98% des molécules de triglycéride de tout le composant gras possède une chaîne d'acide gras insaturé dans la position sn-2 de la structure de glycérol.

5. Produit selon l'une des revendications 1 à 4, **caractérisé en ce que** le composant gras du produit représente 5 à 80% du poids du produit.

6. Le produit selon l'une des revendications 1 à 5, **caractérisé en ce que** le produit est une graisse d'Allanblackia à 100% ou une graisse de Pentadesma à 100%.

7. Produit selon l'une des revendications 1 à 5, **caractérisé en ce qu'**il comprend une première zone/partie comprenant de la graisse d'Allanblackia et/ou de graisse de Pentadesma, et une deuxième zone/partie comprenant du beurre de cacao, du chocolat ou de l'eau, lesdites première et deuxième zones/parties étant en contact l'une avec l'autre au niveau d'une interface s'étendant entre les deux.

8. Procédé de traitement d'un composant gras à base de triglycérides initial comprenant au moins de la graisse d'Allanblackia et/ou de la graisse de Pentadesma, de préférence dans un produit tel que défini dans l'une des revendications 1 à 7 ou pour être combiné avec au moins un composant additionnel pour obtenir un produit tel que défini dans l'une des revendications 1 à 5 et 7, ledit procédé comprenant les étapes de:
a) faire fondre de la graisse pour générer une première phase consistant en de la graisse fondue; et
b) mettre en contact, dans une zone d'exposition, la graisse fondue de la première phase avec un matériau de refroidissement ayant une température qui est entre 1000 et 10'000 fois plus basse que la température de cristallisation d'au moins une structure cristalline modifiée de la graisse fondue de la première phase, afin d'induire une cristallisation d'au moins une structure cristalline modifiée et former une deuxième phase consistant en une graisse solide comprenant des cristaux de graisse d'Allanblackia et/ou des cristaux de graisse de Pentadesma.

9. Procédé selon la revendication 8, **caractérisé en ce que** la différence de température entre la température de cristallisation d'au moins une structure de cristaux modifiée et le matériau de refroidissement se situe entre 1000 et 3000.

10. Procédé selon la revendication 8 ou 9, **caractérisé en ce que** la période de rétention de la graisse fondue dans la zone d'exposition où elle est en contact thermique avec le matériau de refroidissement est de 5 secondes à 60 minutes, de préférence de 1 min à 10 min.

11. Procédé selon l'une des revendications 8 à 10, **caractérisé en ce qu'**on établit un secteur de découpe mécanique et/ou un motif d'écoulement étendu dans la zone d'exposition pendant au moins une fraction de la période de rétention.

12. Procédé selon l'une des revendications 8 à 11, **caractérisé en ce qu'**on ajoute des germes cristallins d'au moins une structure cristalline modifiée de graisse d'Allanblackia ou une structure cristalline modifiée de graisse de Pentadesma à la phase de graisse fondue avant ou pendant le contact de la phase de graisse fondue avec le matériau de refroidissement.

13. Procédé selon l'une des revendications 8 à 12, **caractérisé en ce que** la graisse initiale d'Allanblackia ou la graisse initiale de Pentadesma est obtenue par raffinage/purification de graisse naturelle d'Allanblackia ou de graisse naturelle de Pentadesma sans altérer les concentrations relatives de triglycérides et sans exposer la graisse naturelle d'Allanblackia ou la graisse naturelle de Pentadesma à n'importe quelle étape de fractionnement, d'hydrogénation ou d'interestérification.

14. Procédé de préparation d'un produit tel que défini dans l'une des revendications 1 à 7, **caractérisé en ce qu'**un procédé selon l'une des revendications 8 à 13 est appliqué à un composant de graisse d'Allanblackia et/ou un composant de graisse de Pentadesma dans un produit précurseur, ou **en ce qu'**un procédé selon l'une des revendications 8 à 13 est appliqué à un composant de graisse d'Allanblackia et/ou un composant de graisse de Pentadesma, lequel composant de graisse ainsi traité est ensuite combiné avec au moins un composant additionnel.
